# EUROPEAN PATENT SPECIFICATION

(11) **EP 4 179 933 B1**
(45) Date of publication and mention of the grant of the patent: **12.06.2024**
(21) Application number: 22216657.1
(22) Date of filing: 20.12.2021
(51) Int. Cl.: A47J 43/046, A47J 43/044, A47J 43/07

(54) **MICRO PUREE MACHINE**
MIKRO-PÜREE-MASCHINE
MACHINE DE MICRO-PURÉE

(30) Priority: 31.12.2020 US 202017139467; 31.12.2020 US 202017139494; 31.12.2020 US 202017139542; 31.12.2020 US 202017139567; 31.12.2020 US 202017139660; 31.12.2020 US 202017139681
(43) Date of publication of application: 17.05.2023
(62) Divisional of application: 21844548.4
(73) Proprietor: SharkNinja Operating LLC, Needham, MA 02494 (US)
(72) Inventor: O'Loughlin, Nicholas, Lantau Island (HK); Deng, Xu Sheng, Huizhou, 516003 (CN); Zhang, Ting Hua, Shenzhen (CN); SHI, Ming Li, Needham, MA (US); Power, Michelle, London, N4 3PN (GB); He, Pushan, Shenzhen (CN); Chu, Ping, Needham, MA (US); PROULX, Jared, Needham, MA (US)
(74) Representative: Carroll, Christopher P.

(56) References cited:
- EP-B1- 0 891 139
- WO-A1-2019/200491

## Description

### FIELD OF THE INVENTION

The present disclosure relates to a kitchen and food processing device, and more particularly, to a device and system for micro pureeing frozen ingredients to make frozen foods and drinks.

### BACKGROUND

Home use machines that are intended to make ice creams, gelatos, frozen yogurts, sorbets and the like are known in the art. Typically, a user adds a series of non-frozen ingredients to a bowl. The ingredients are then churned by a paddle while a refrigeration mechanism simultaneously freezes the ingredients. These devices have known shortcomings including, but not limited to, the amount of time and effort required by the user to complete the ice cream making process. Machines of this nature are impractical for preparing most non-dessert food products.

An alternative type of machine known to make a frozen food product is a micro-puree machine. Typically, machines of this nature spin and plunge a blade into a pre-frozen ingredient or combination of ingredients. While able to make frozen desserts like ice creams, gelatos, frozen yogurts, sorbets and the like, micro-puree style machines can also prepare non-dessert types of foods such as non-dessert purees and mousses. In addition, the devices are able to prepare either an entire batch of ingredients to be served or they can prepare a pre-desired number of servings. Known machines of this nature are commercial-grade and are exceedingly large and heavy. They require complex systems that are difficult to maintain and are typically too expensive, cumbersome and/or impractical for home use by consumers.

The present invention solves these and other problems in the prior art.

WO 2019/200491A1 describes a device for crushing deep-frozen foodstuffs provided in block form. Said device comprises a tool (2) which is attached to one end (16) of a rotatable shaft (6) by means of which, under normal operating conditions, the tool is rotated about an axis of rotation (X) and is moved along the axis of rotation (X) in the direction (S) of the block of foodstuff, scraping layers of the foodstuff off the block of foodstuff. The tool (2) can be removed from the shaft end (16) and correctly reattached thereto without using a tool. The attachment of the tool (2) to the shaft end (16) is designed such that, when the tool (2) is correctly attached to the shaft end (16), it axially abuts the shaft end (16) and is frictionally held on the shaft end (16), and such that it forms a rotational interlocking connection with the shaft end (16) in the intended direction of rotation of the drive, for the transmission of drive forces from the shaft (6) to the tool (2). The invention also relates to a tool detection device (17, 23, 24) which can be used to determine whether a tool (2) is arranged on the shaft end (16) as intended or not. Said devices according to the invention can be used to implement an automatic coupling of the knife (2) to the knife block (6) or decoupling therefrom such that the knife (2) can be provided together with the container (12) containing the block of foodstuff, and it can simultaneously be ensured that operation is only performed or possible if the coupling of the tool (2) is carried out as intended. As such, the operation is fast and hygienic as well as extremely safe.

### SUMMARY

The invention is set out in the appended set of clams. An object of the present invention is to provide an improved device for the processing of food and beverage ingredients.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
FIG. 1 is an isometric view of a device according to an exemplary implementation of the present disclosure including a bowl assembly and lid assembly;
FIG. 2 is another isometric view of the device of FIG. 1 without the bowl assembly and lid assembly;
FIG. 3A is a left side view of the device of FIG. 1 without the bowl assembly and lid assembly;
FIG. 3B is a left side view of the device of FIG. 1 with the bowl assembly and lid assembly in an up position;
FIG. 3C is a left side view of the device of FIG. 1 with the bowl assembly and lid assembly in a down position;
FIG. 4A is a right side view of the device of FIG. 1 without the bowl assembly and lid assembly;
FIG. 4B is a right side view of the device of FIG. 1 with the bowl assembly and lid assembly in an up position;
FIG. 4C is a right side view of the device of FIG. 1 with the bowl assembly and lid assembly in a down position;
FIG. 5A is a rear view of the device of FIG. 1 with the bowl assembly and lid assembly in an up position;
FIG. 5B is a right side cutaway view of the device of FIG. 5A along section A-A;
FIG. 6A is a rear view of the device of FIG. 1 with the bowl assembly and lid assembly in a down position;
FIG. 6B is a left side cutaway view of the device of FIG. 6A along section B-B;
FIG. 7 is an isometric view of internal components of the device of FIG. 1;
FIG. 8A is front view of gearbox and drive motor assemblies of the device of FIG. 1;
FIG. 8B is side cutaway view of the assemblies of FIG. 8A along section C-C;
FIG. 9 is an isometric view of the gearbox and drive motor assemblies of the device with housings removed;
FIG. 10 is an isometric view of the blade assembly of the device of FIG. 1;
FIG. 11 is a plan view of the underside of the blade assembly of FIG. 10;
FIG. 12 is a plan view of the top of the blade assembly of FIG. 10;
FIG. 13A is a section view through the center of the central support hub;
FIG. 13B is a plan view of the top of the central support hub;
FIG. 14A is an isometric view of the power coupling of the device of FIG. 1;
FIG. 14B is a plan view of the bottom of the power coupling of FIG. 14A;
FIG. 15 is a plan view of the central support hub from above;
FIG. 16A is a cutaway view of the central support hub along section A-A of FIG. 15;
FIG. 16B is a cutaway view of the central support hub along section B-B of FIG. 15;
FIG. 17 is a section view through a cutting blade of the device of FIG. 1;
FIG. 18 is a cutting profile of the blade assembly of FIG. 10;
FIG. 19 is an isometric view of a V-shaped groove on the underside of the central support hub;
FIG. 20 is an isometric view of the exterior of the beaker of the bowl assembly;
FIG. 21 is an isometric view of the outer bowl of the bowl assembly;
FIG. 22 is an isometric view of the bottom of the outer bowl;
FIG. 23 is an isometric view of the exterior of the lifting platform;
FIG. 24 is an isometric view of the interior of the lifting platform;
FIG. 25A is a plan view of the cam path tubular insert;
FIG. 25B is a sectional view of the cam path tubular insert along section A-A of FIG. 25A;
FIG. 26 is a sectional view of the cam path tubular insert inside the lifting platform;
FIG. 27 is an isometric view of the underside of the lid assembly with a blade assembly installed therein;
FIG. 28 is top view of the blade assembly and spring-biased primary sets of clips;
FIG. 29 is a side cross-sectional view of FIG. 28 along line 1-1 with additional features of the lid assembly shown;
FIG. 30 is an enlarged view of the interaction between the primary set of clips and the blade assembly;
FIG. 31A is an overhead view of the lid assembly with the clip release lever in the home position;
FIG. 31B is an overhead view of the lid assembly with the clip release lever in approximately a mid-way rotated position;
FIG. 31C is an overhead view of the lid assembly with the clip release lever in the fully-rotated position;
FIG. 32 is a partial isometric view of the underside of the upper housing;
FIG. 33A is a schematic view of the interaction between the clip release lever and the clip lever contact ledge during installation when no blade is present;
FIG. 33B is a schematic view of the interaction between the clip release lever and the clip lever contact ledge during installation when a blade is properly installed;
FIG. 34A is an overhead schematic view of the initial stages of installation of the bowl assembly and the lid assembly with no blade assembly installed in the lid assembly;
FIG. 34B is an overhead schematic view part way through the installation of the bowl assembly and the lid assembly with no blade assembly installed in the lid assembly;
FIG. 34C is an overhead schematic view of the final stages of installation of the bowl assembly and the lid assembly with no blade assembly installed in the lid assembly;
FIG. 35A is an overhead schematic view of the initial stages of installation of the bowl assembly and the lid assembly with a blade assembly properly installed in the lid assembly;
FIG. 35B is an overhead schematic view part way through the installation of the bowl assembly and the lid assembly with a blade assembly properly installed in the lid assembly; and
FIG. 35C is an overhead schematic view of the final stages of installation of the bowl assembly and the lid assembly with a blade assembly properly installed in the lid assembly.

### DETAILED DESCRIPTION

The present disclosure may be understood more readily by reference to the following detailed description of the disclosure taken in connection with the accompanying drawing figures, which form a part of this disclosure. It is to be understood that this disclosure is not limited to the specific devices, methods, conditions or parameters described and/or shown herein, and that the terminology used herein is for the purpose of describing particular embodiments by way of example only and is not intended to be limiting of the claimed disclosure.

Also, as used in the specification and including the appended claims, the singular forms "a," "an," and "the" include the plural, and reference to a particular numerical value includes at least that particular value, unless the context clearly dictates otherwise. Ranges may be expressed herein as from "about" or "approximately" one particular value and/or to "about" or "approximately" another particular value. When such a range is expressed, another embodiment includes from the one particular value and/or to the other particular value. Similarly, when values are expressed as approximations, by use of the antecedent "about," it will be understood that the particular value forms another embodiment. It is also understood that all spatial references, such as, for example, horizontal, vertical, top, upper, lower, bottom, left and right, are for illustrative purposes only and can be varied within the scope of the disclosure.

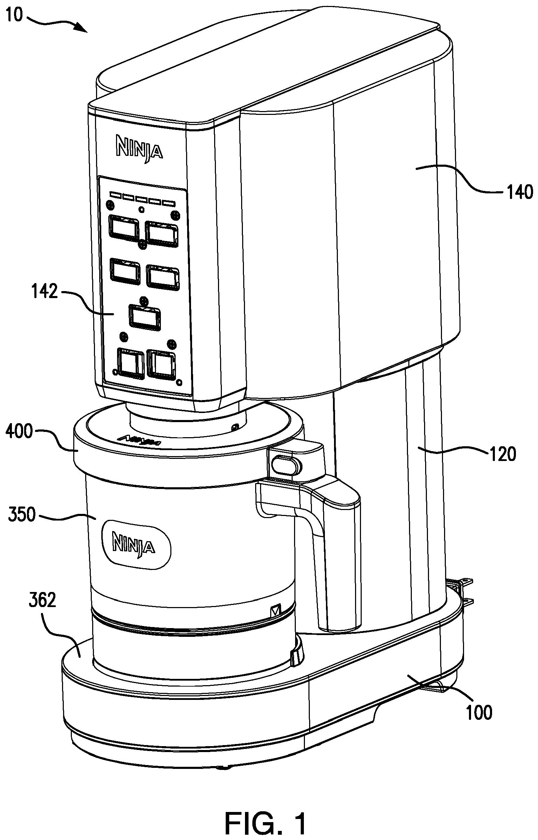

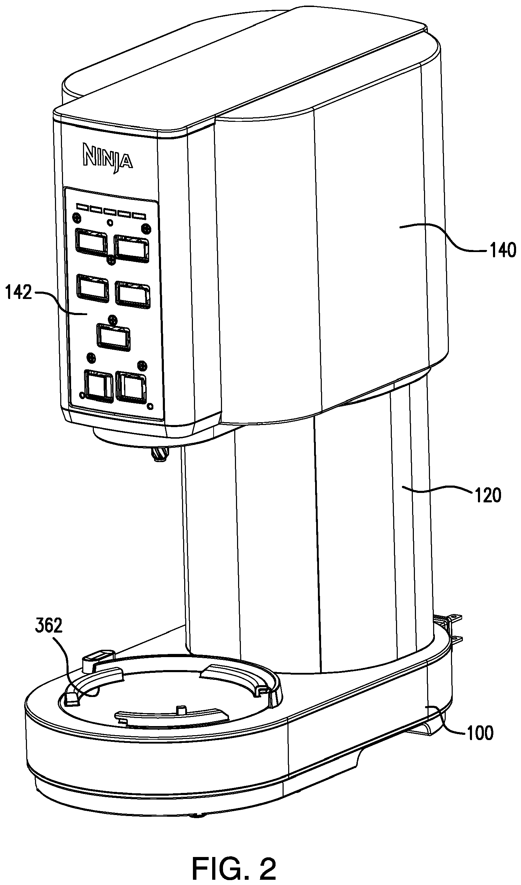

FIG. 1 shows an isometric view of a device 10 according to an exemplary embodiment of the present disclosure. The device 10 includes a lower housing or base 100 and an upper housing 140. A middle housing 120 extends between the lower housing 100 and upper housing 140. The upper housing 140 includes an interface 142 for receiving user inputs to control the device 10 and/or display information. The device 10 includes a removable bowl assembly 350 and lid assembly 400 on the base 100. FIG. 2 shows the device 10 with the bowl assembly 350 and lid assembly 400 removed.

As further described herein, the bowl assembly 350 receives one or more ingredients for processing. The bowl assembly 350 and lid assembly 400 are placed on the lower housing 100 as show in FIG. 1. The bowl assembly 350 and lid assembly 400 are rotatable on a lifting platform 362 from a down position to an up position, and vice versa.

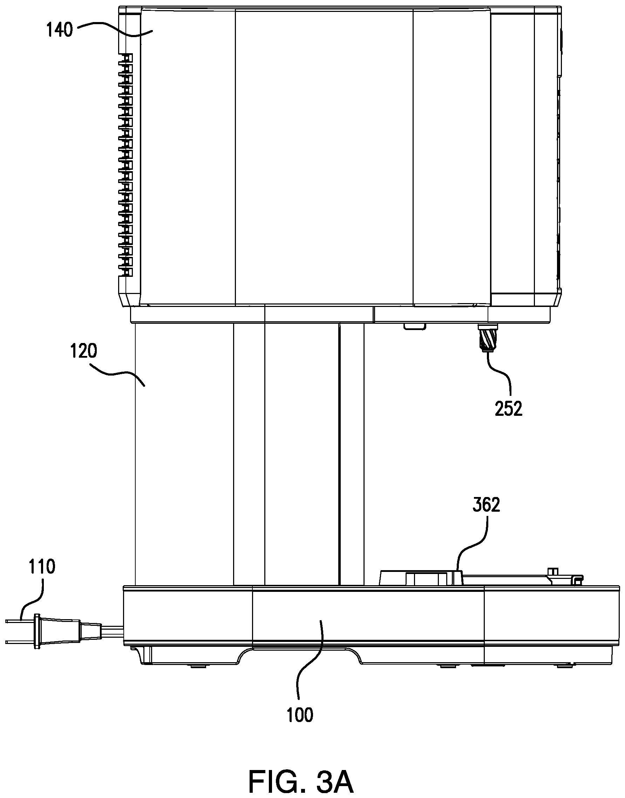

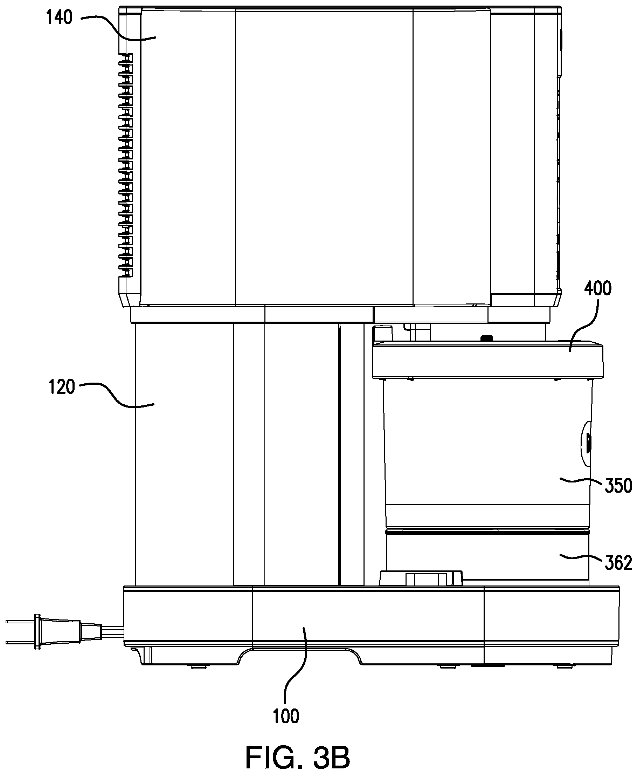

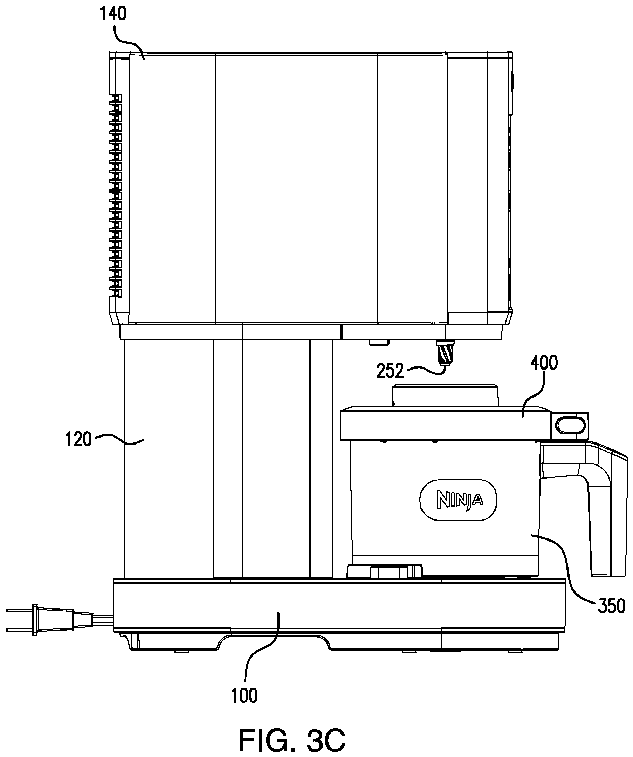

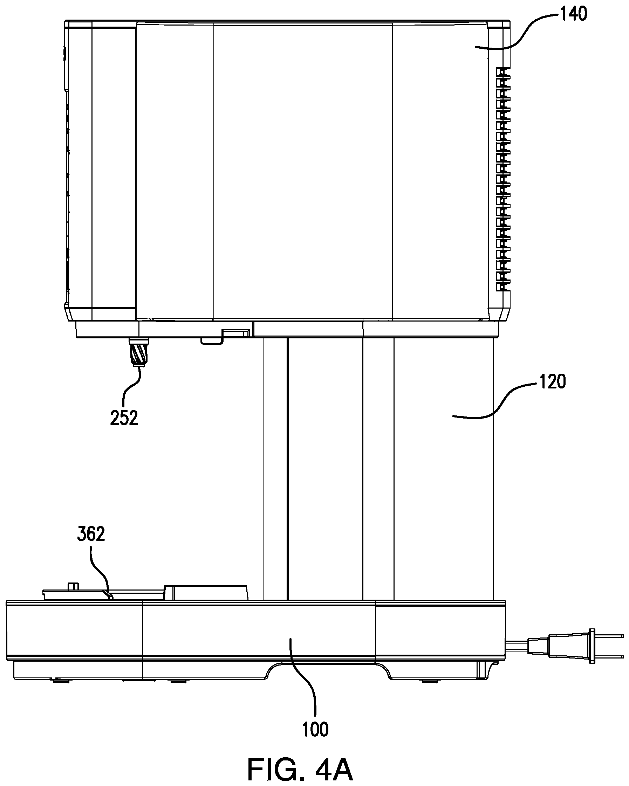

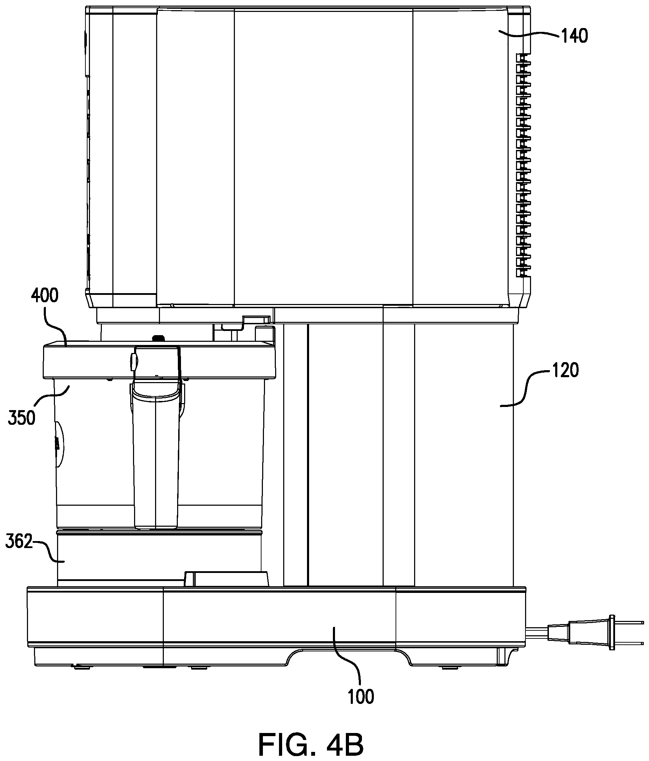

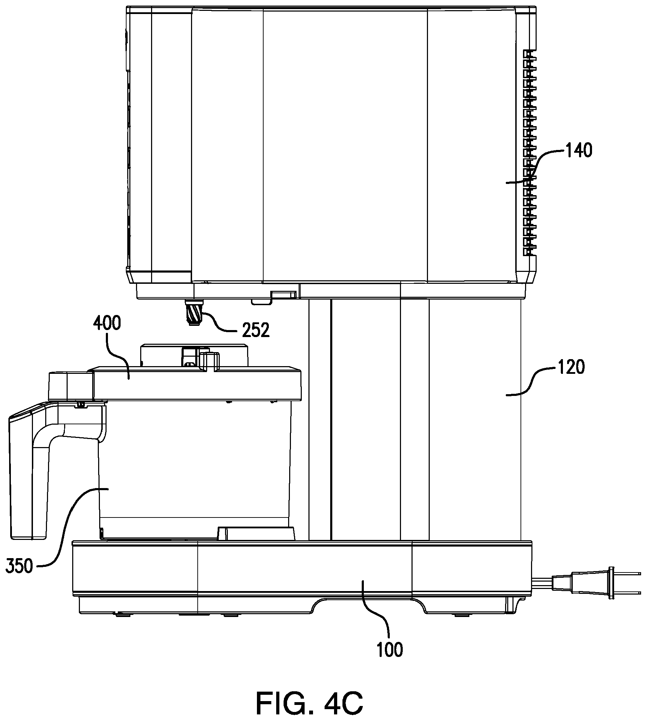

FIGS. 3A-3C illustrate left side views of the device 10 without a bowl assembly 350 and lid assembly 400, with the bowl assembly 350 and lid assembly 400 in an up position, and with the bowl assembly 350 and lid assembly 400 in a down position, respectively. FIGS. 4A-4C illustrate right side views of the device 10 without a bowl assembly 350 and lid assembly 400, with the bowl assembly 350 and lid assembly 400 in an up position, and with the bowl assembly 350 and lid assembly in a down position, respectively.

As will be discussed in more detail below, when the bowl assembly 350 and lid assembly 400 are raised vertically to the up position, a blade assembly 300 within the lid assembly 400 engages with a power coupling 252 at the distal end of power shaft 250 extending from the upper housing 140. A rotational force is delivered via the power coupling 252 to the blade assembly 300 to spin one or more blades as they engage with ingredients inside the bowl assembly 350.

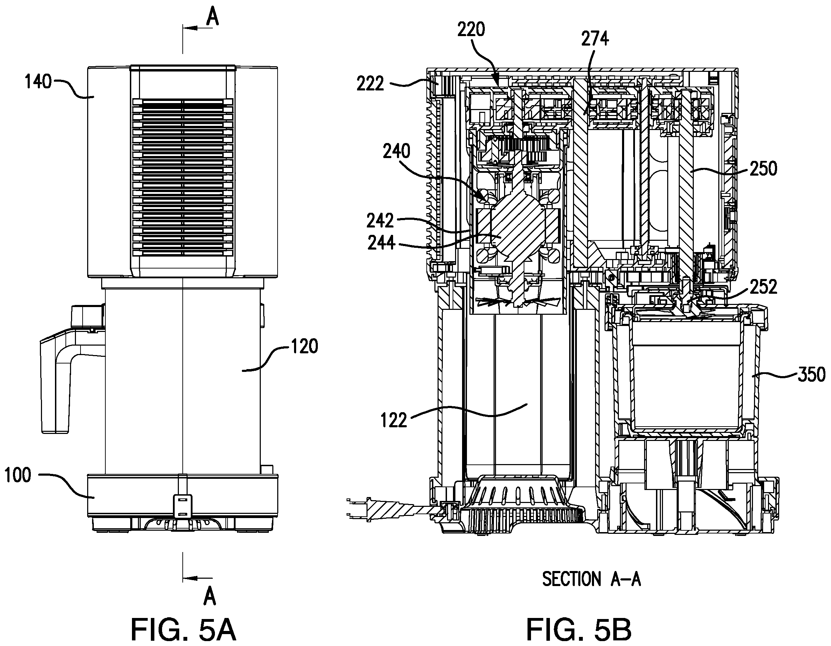

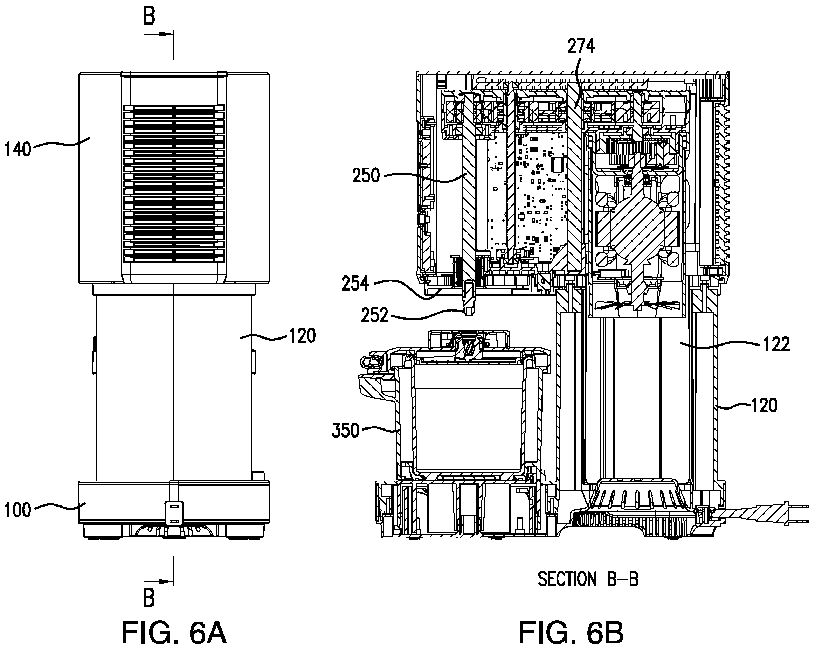

FIG. 5A is rear view of the device 10, with the bowl assembly 350 in the up position, showing a section line A-A. FIG. 5B is right side cutaway view of the device 10 along section A-A. FIG. 6A is rear view of the device 10, with the bowl assembly 350 in the down position, showing a section line B-B. FIG. 6B is a left side cutaway view of the device 10 along section B-B.

The upper housing 140 includes gearbox assembly 220 and a drive motor assembly 240 connected to the gearbox assembly 220. The drive motor assembly 240 includes a drive motor housing 242 and a drive motor 244. The gearbox assembly 220 includes a gearbox housing 222 containing a plurality of gears for delivering power from the drive motor 244 to a power shaft 250. The power coupling 252 is positioned on a distal end of the power shaft 250.

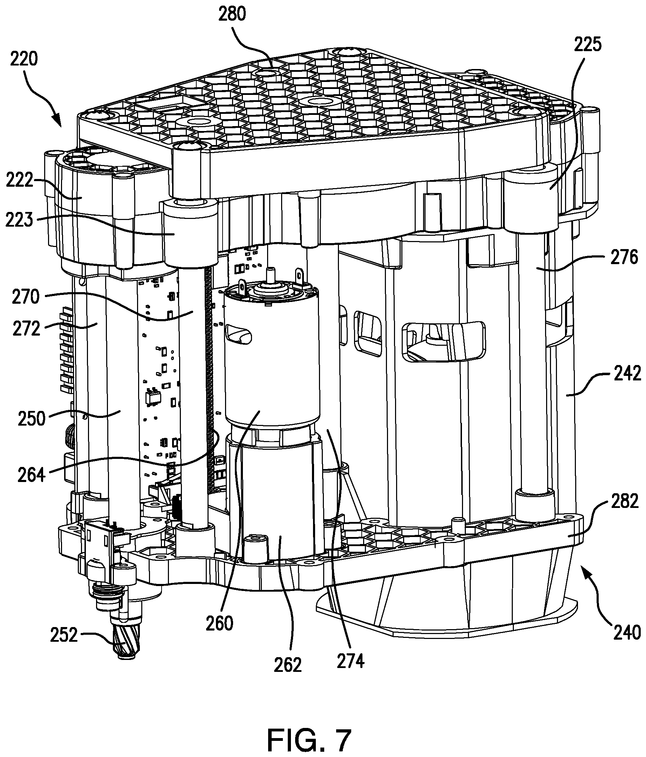

FIG. 7 is an isometric view of the gearbox assembly 220 and drive motor assembly 240 of the device 10 with surrounding structure. The device 10 includes an upper support 280 and a lower support 282 positioned in the upper housing 140. The gearbox assembly 220 and drive motor assembly 240 are slidable up and down with respect to the upper and lower supports 280, 282 along a plurality of pillars 270, 272, 274, 276. The pillars and supports provide rigidity and concentric alignment. In the exemplary embodiment, the gearbox assembly 220 and drive motor assembly 240 are supported on the pillars via apertures 223, 225 in the gearbox housing 222. In other embodiments, there may be apertures on the drive motor housing 242 in addition to or instead of on the gearbox housing 222.

The device 10 includes a position motor 260 (e.g., DC motor) which drives a gearbox 262. The gearbox 262 is engaged with a vertical threaded rod or worm gear 264 extending between the upper and lower supports 280, 282. Actuation of the position motor 260, either manually via the interface 142 or automatically, moves the gearbox assembly 220 and drive motor assembly 240 up and down. The rod pitch of the worm gear 264 relate to a vertical decent rate of the device 10. The drive motor assembly 240 moves down into a cavity 122 in the middle housing 120 (see FIGS. 5B and 6B).

The power shaft 250 and power coupling 252 move together with the gearbox assembly 220 and drive motor assembly 240. Thus, actuation of the position motor 260 in turn allows for vertical movement and positioning of a blade assembly 300 removably attached to the power coupling 252. In the exemplary embodiment, the up and down travel distance is between 70 and 120 mm, or between 90 and 100 mm, such as about 94 mm.

The power coupling 252, and therefore the blade assembly 300, may be controlled at different rotational speeds (e.g., via the drive motor 244) and moved up and down (e.g., via the position motor 260) in different patterns and speeds to make different food items such as frozen purees and desserts. Exemplary programs are illustrated below in Table 1.

**Table 1:**

| Program | Decen t Blade Speed (rpm) | Decen t Time (s) | Retractio n Blade Speed (rpm) | Retractio n Time (s) | Decent RPM/m m | Retract RPM/m m | Total Program RPM/m m |
|---|---|---|---|---|---|---|---|
| Ice Cream | 1200 | 60 | 450 | 30 | 13 | 2 | 15 |
| Sorbet | 1600 | 120 | 450 | 30 | 34 | 2 | 36 |
| Gelato | 1200 | 60 | 450 | 30 | 13 | 2 | 15 |
| Milkshak e | 1600 | 60 | 450 | 30 | 17 | 2 | 19 |
| Smoothie Bowl | 1600 | 120 | 1600 | 30 | 34 | 9 | 43 |
| Frozen Drink | 1600 | 120 | 450 | 30 | 34 | 2 | 36 |
| Slush | 1600 | 120 | 1600 | 30 | 34 | 9 | 43 |
| Whip / Re-Spin | 1000 | 30 | 1000 | 30 | 5 | 5 | 11 |
| Mix-In | 450 | 30 | 450 | 30 | 2 | 2 | 5 |

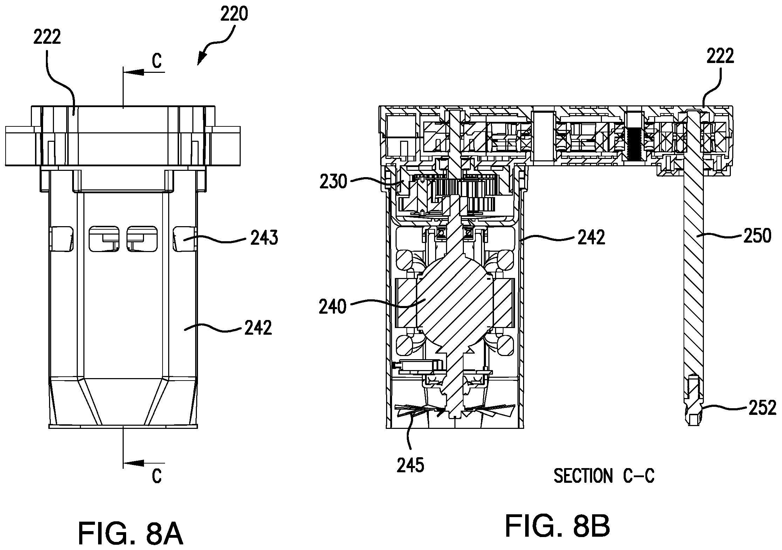

FIG. 8A is front view of the gearbox assembly 220 and drive motor assembly 240 of the device 10 of FIG. 1. FIG. 8B is side cutaway view of the assemblies of FIG. 8A along a section C-C. As discussed above, the gear assembly 220 includes a housing 222. In the exemplary embodiment, the housing 222 includes upper and lower portions removably attached together. A housing 242 of the drive motor assembly 240 is removably attached to the lower portion of the housing 222. In other embodiments, the housing 242 is formed together with the housing 222 or at least together with the lower portion of the housing 222. In the exemplary embodiment, the housing 242 includes a plurality of openings 243 for ventilation and cooling of the drive motor 244. The device 10 may further include a fan 245 on the motor 244.

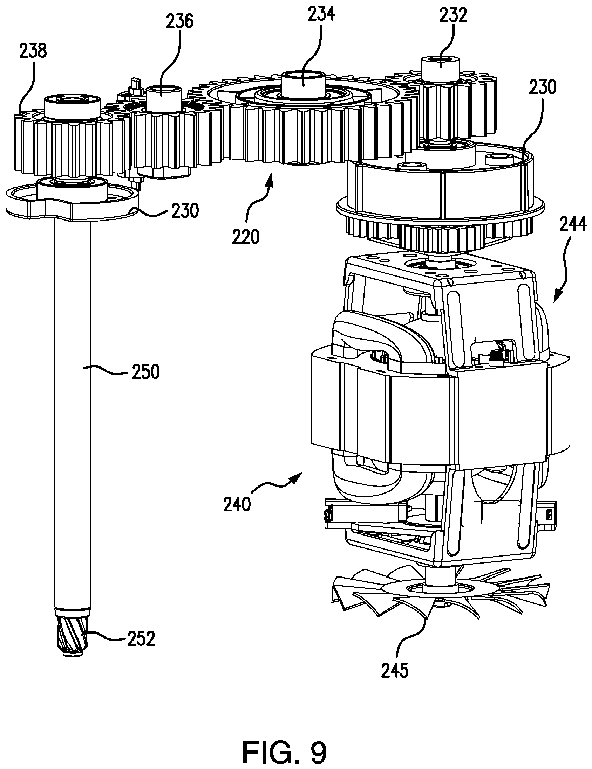

FIG. 9 is an isometric view of the gearbox assembly 220 and drive motor assembly 240 with the housings 222, 242 removed. In the exemplary embodiment, the drive motor 244 is rotatably connected to a transmission 230. The transmission 230 is connected to a first gear 232. The first gear 232 drives a gear 238, either directly or through one or a plurality of intermediate gears 234, 236, which then drives the power shaft 250.

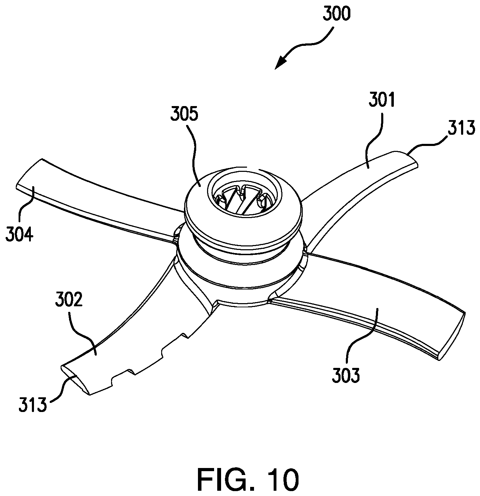

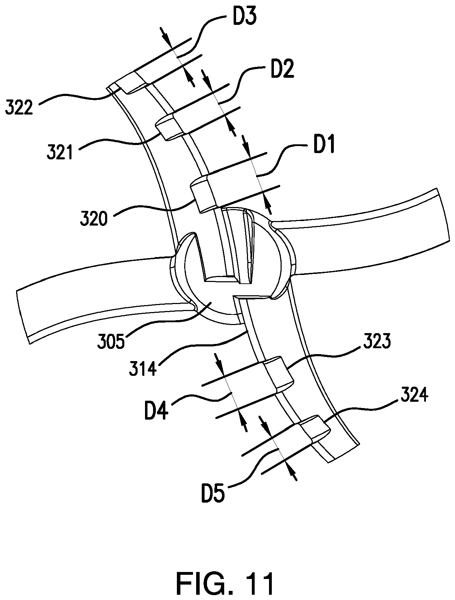

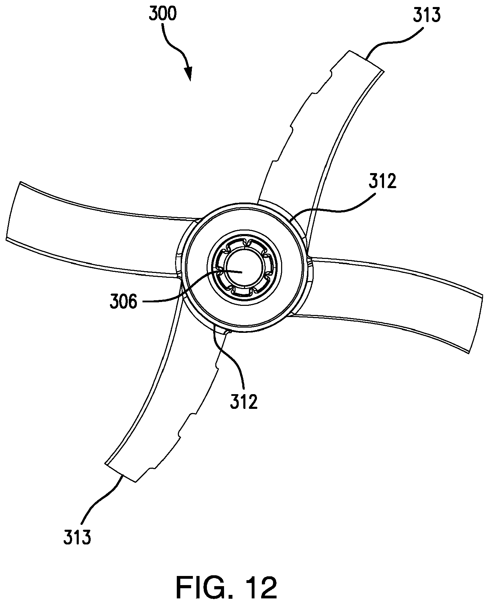

The device 10 comprises a moving blade assembly 300 for processing food and beverage items. FIG. 10 is an isometric view of the moving blade assembly 300. FIG. 11 is a plan view of the underside of the moving blade assembly 300. FIG. 12 is a plan view of the top of the moving blade assembly 300. The moving blade assembly 300 comprises one or more cutting blades 301, 302 and one or more mixing blades 303, 304. The moving blade assembly 300 further comprises a central support hub 305. The cutting blades 301, 302 and the mixing blades 303, 304 extend outward from central support hub 305. The central support hub 305 provides a central opening 306 for accepting the power coupling 252.

With reference to FIG. 10, FIG. 11 and FIG. 12, cutting blades 301 and 302 of said moving blade assembly 300 comprise a horizontally extending length having a proximal end 312 and a distal end 313. The proximal end 312 meets the central support hub 305. The cutting blades 301, 302 comprise a leading edge 314 and a follower edge 315. Likewise, mixing blades 303, 304 extend from the central support hub 305 and are generally positioned in an opposing orientation.

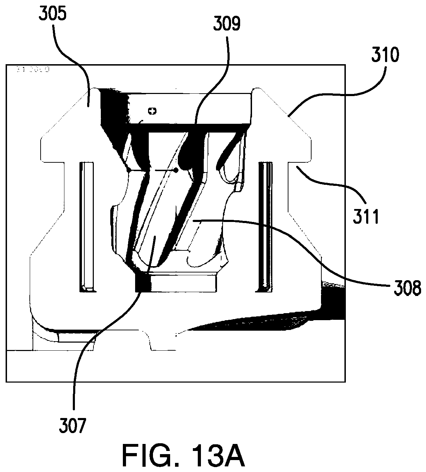

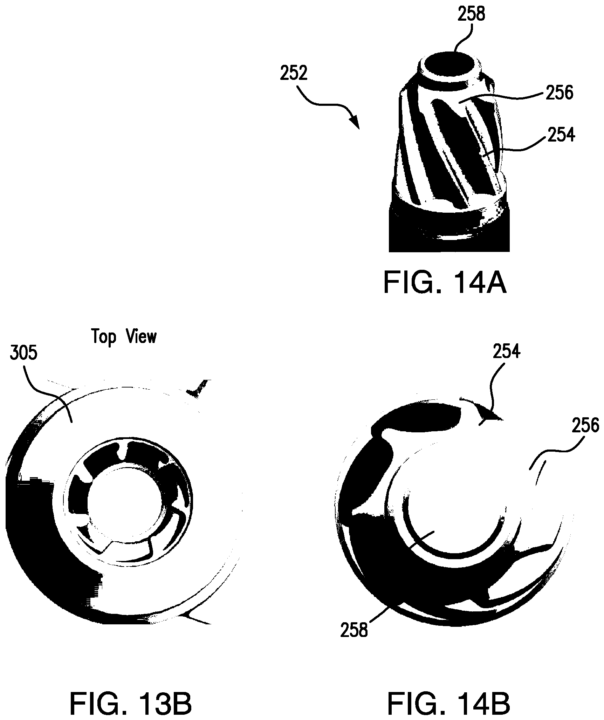

FIG. 13A and FIG. 13B show the engagement features of the central support hub 305. The central support hub 305 comprises a plurality of male helical couplings 307 positioned along the interior sides of the central opening 306 and extending into the central opening 306. Between said male helical couplings 307 are vacancies 308. In an exemplary embodiment, the male helical couplings 307 comprise an angled lead in 309. FIG. 14A and 14B show the corresponding engagement features of the power coupling 252. The power coupling 252 has a plurality of external male helical coupling components 254 with an angled lead-in 256. Said male helical coupling components 254 engage with corresponding vacancies 308 within the central support hub 305. In some embodiments, the power coupling 252 includes a magnet 258 at a distal end to aid in positioning and removably securing the blade assembly 300 and the power coupling 252.

FIGS. 13A, and 28-30 show engagement features of the blade assembly 300 for engagement with the lid assembly 400. The central support hub 305 comprises an angled external ledge 310 and undercut 311. As will be discussed more fully below, the lid assembly 400 comprises a primary sets of clips 408 that are spring-biased toward the center of the lid assembly 400. As the central support hub 305 travels upward into the lid assembly 400, the clips engage the undercut 311. The lid assembly 400 and the blade assembly 300 are held together prior to the blade assembly 300 engaging the power coupling 252.

It will be appreciated that the moving blade assembly 300 can be a unitary structure or can comprise distinct structures joined together either directly or indirectly. The moving blade assembly 300 in one embodiment is cast stainless steel with a PVD titanium coating.

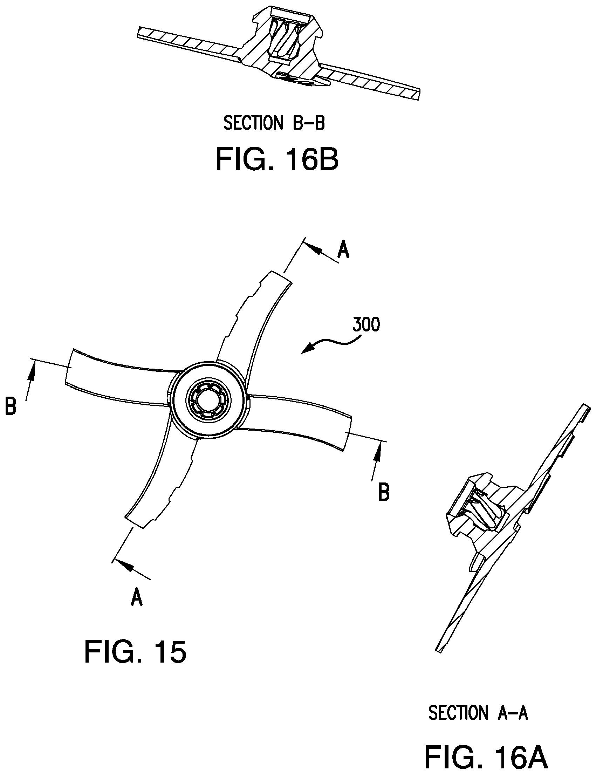

In an exemplary embodiment as shown in FIGS. 15, 16A and 16B, cutting blades 301, 302 and mixing blades 303, 304 are curved, with said curvature extending along all or at least a portion of the length of the blades in a concave configuration in relation to the direction of blade rotation during use.

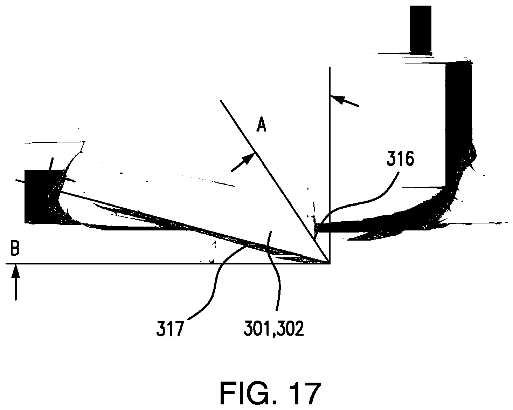

As shown in FIG. 17, the said cutting blades 301, 302 further comprise a rake angle labeled "A" and a clearance angle labeled "B". The plane of rotation defines a horizontal reference plane and the axis of rotation is orthogonal to said plane of rotation. Said rake angle A is that angle extending between the rake surface 316 and the vertical axis of rotation. The clearance angle B is the angle extending between the reference plane and the underside 317 of the blade.

Referring again to FIG. 11, the first cutting blade 301 further comprises one or more grooves 320, 321, 322 to aid in cutting efficiency and power management. The grooves 320, 321, 322 are positioned along the leading edge 314 and extend into the body of the cutting blade 301. The second cutting blade 302 also comprises one or more grooves 323, 324, again to aid in cutting efficiency and power management. The grooves 323, 324 are positioned along the leading edge 314 and extend into the body of the blade 302.

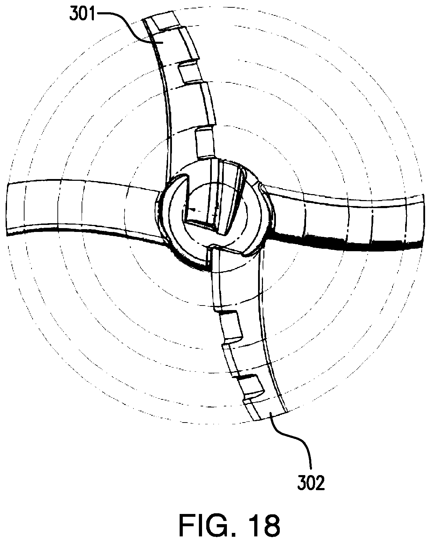

In an exemplary embodiment, with respect to the first cutting blade 301, the dimension D1 of a first groove 320 is greater than the dimension D2 of a second groove 321. Likewise, the dimension D2 of the second groove 321 is greater than the dimension D3 of the third groove 322. Similarly, with respect to the second cutting blade 302, the dimension D4 of the fourth groove 323 is greater than the dimension D5 of the fifth groove 324. Referring to FIG. 18, the said grooves 320, 321, 322, 323, 324 are positioned along the leading edges 314 of the cutting blades 301, 302 so as to create alternate cutting profile rings. The largest groove on the first cutting blade 301, the first groove 320, is positioned closest to the proximal end 312 while the smallest groove on the first cutting blade 301, the third groove 322, is positioned closest to the opposing end of the first cutting blade 301. Similarly, the largest groove on the second cutting blade 302, the fourth groove 323, is positioned closer to the proximal end 312 while the smallest groove on the second cutting blade 302, the fifth groove 324, is positioned closer to the opposing end of the second cutting blade 302. This arrangement of alternating grooves on opposing cutting blades 301, 302 creates a favorable cutting profile.

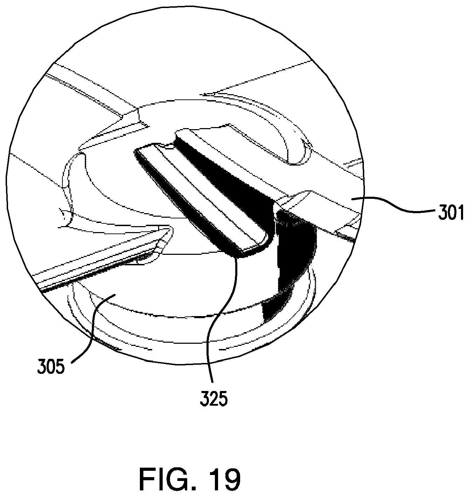

According to the invention, the central support hub 305 comprises at least one V-shaped groove 325 on the underside of the central support hub 305 as can be seen in FIG. 19. One edge of the V-shaped groove 325 extends along a portion of the side of the first cutting blade 301. In an alternate embodiment (not shown), a second V-shaped groove 325 could be provided along a portion of the side of the second cutting blade 302. The V-shaped groove 325 aids in directing the material to be processed away from the central support hub 305 and into the path of the cutting blades 301, 302 and the mixing blades 303, 304.

The device 10 further includes a bowl assembly 350 that joins with a lid assembly 400. The bowl assembly 350 comprises a beaker 351 and an outer bowl 352. The beaker 351 fits inside the outer bowl 352. The beaker 351 holds the food materials to be processed by the device 10 during use.

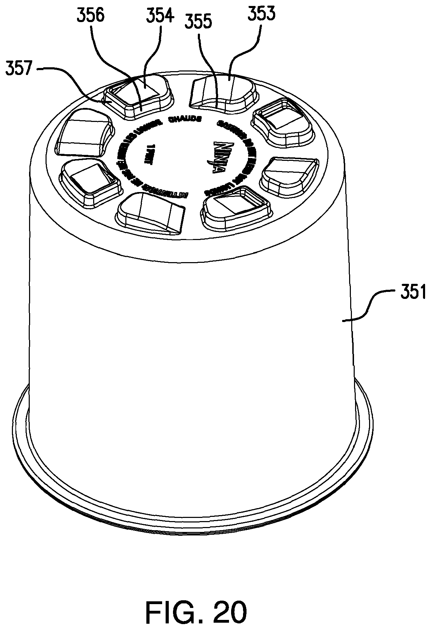

FIG. 20 is an isometric view of the exterior of the beaker 351 and one or more alternating beaker alignment features 353, 354 on the bottom of the beaker 351. In an exemplary embodiment, a first type of beaker alignment features 353 have a peripheral wall 355 that meets the bottom surface of the beaker 351 at an angle. A second type of alignment features 354 have a peripheral wall 356 that creates a vertical face 357. Once the beaker 351 is joined with the outer bowl 352, the vertical face 357 prevents rotation of the beaker 351 inside the outer bowl 352 when the moving blade assembly 300 is operating during use of the device.

The beaker alignment features 353, 354 also aid in the fixing of frozen ingredients within said beaker 351. The beaker alignment features 353, 354 prevent such ingredients from rotational movement within the beaker 351 in the direction of the moving blade assembly 300 during use. It will be appreciated that in one embodiment, the beaker 351 can be manufactured from a disposable material to enhance the convenience of using the device 10. Further, the beaker 351 can be sold as a stand alone item, and further can be prefilled with ingredients to be processed during use of the device 10.

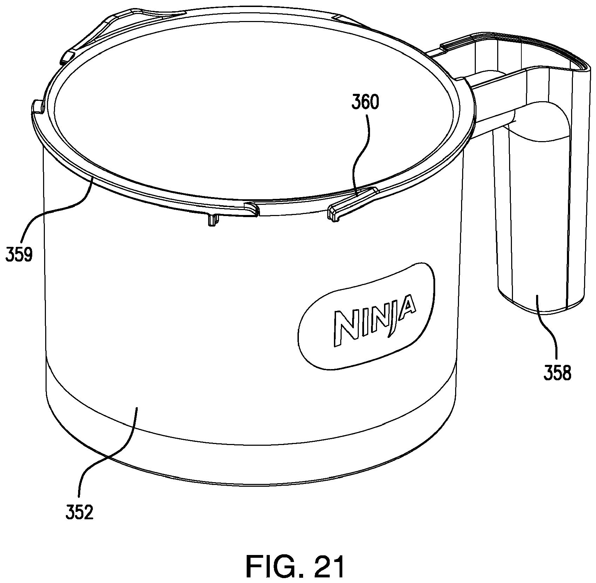

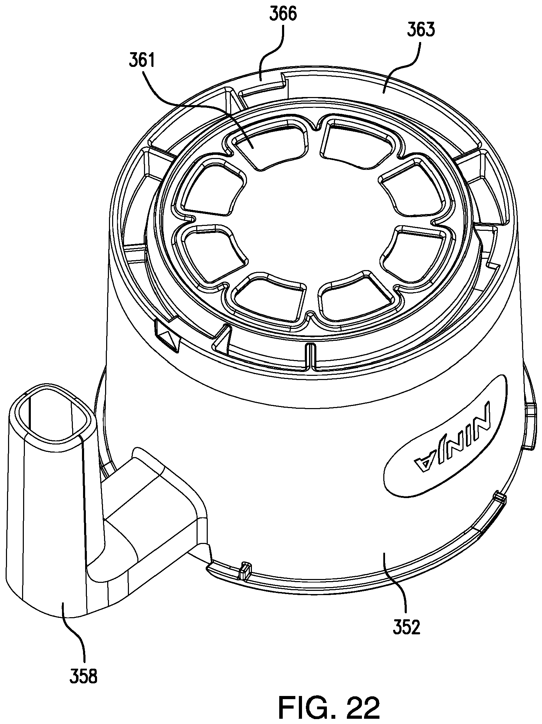

FIG. 21 is an isometric view of the outer bowl 352 comprising a handle 358. As noted above, the beaker 351 fits within the outer bowl 352. As can be seen in FIG. 22, the bottom of outer bowl 352 comprises one or more alignment features 361 that engage with the alignment features 353, 354 on the bottom of beaker 351. The vertical faces 357 of the beaker alignment features abut the outer bowl alignment features 361 to prevent the relative rotational movement of the beaker 351 within the outer bowl 352 during use of the device 10.

The outer bowl 352 further comprises lid locking features to attach the lid assembly 400 to the outer bowl by rotation. FIG. 21 shows an outwardly projecting lip 359 along a portion of the circumference of the outer bowl 352. The lip 359 is interrupted along the circumference of the outer bowl 352. One or more protrusions 360 extend in a downward biased position from the lip 359 at the point where the lip is interrupted. Lid assembly connectors 373 travel along the lip 359 during rotation of the lid assembly 400 onto the outer bowl 352. The protrusion 360 acts as a ramp for said connectors 373. When the end of the protrusion 360 is reached, the lid assembly connectors 373 occupy the aforementioned spaces existing along the lip 359.

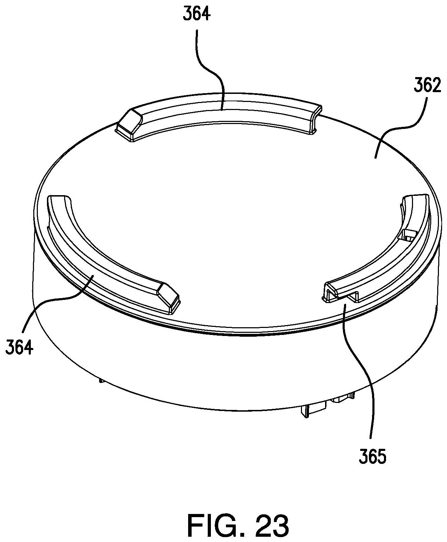

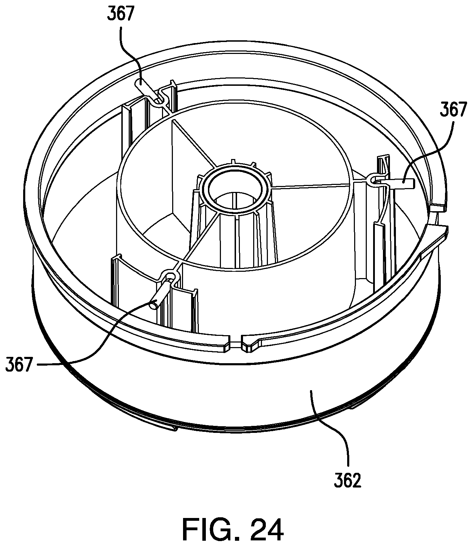

FIG. 23 is an isometric view of the top of the lifting platform 362. FIG. 24 is an isometric view of the interior of the lifting platform 362. The outer bowl 352 comprises locating and locking elements for positioning and connecting the outer bowl 352 to the top of the lifting platform 362. As can be seen in FIG. 22 and FIG. 23, the underside of the outer bowl 352 comprises one or more indentations 363 sized to receive corresponding projections 364 on the top of said lifting platform 362. At least one such projection on the top of said lifting platform 362 comprises a cutaway 365 (FIG. 23) to receive a corresponding ledge 366 (FIG. 22) on the outer bowl 352 when the outer bowl 352 is rotated on the lifting platform 362, locking the outer bowl 352 and the lifting platform 362 together.

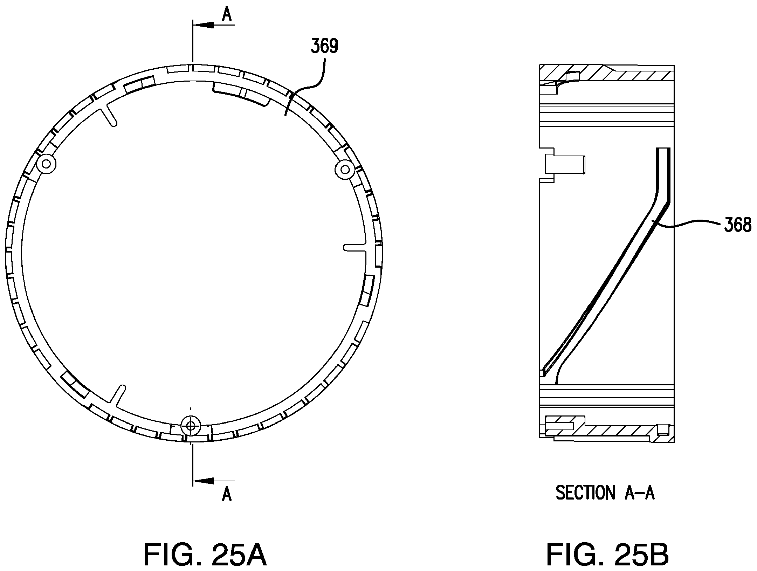

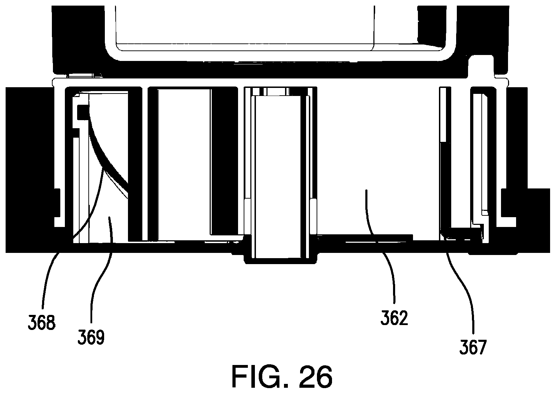

Referring to FIG. 24 and FIG. 25, the interior of lifting platform 362 further comprises one or more pins 367. The pins 367 follow a cam path 368 located on the interior wall of a cam path tubular insert 369 positioned inside the lifting platform 362. FIG. 26 is a cutaway view showing the cam path tubular insert 369 positioned within the lifting platform 362 with the bowl assembly 350 in the down position. When the bowl assembly 350 is locked to the lifting platform 362 and rotated via the handle 358, the pins 367 travel along the cam path 368, vertically raising the bowl assembly 350, lid assembly 400, and lifting platform 362, enabling the blade assembly 300 to engage with the power coupling 252.

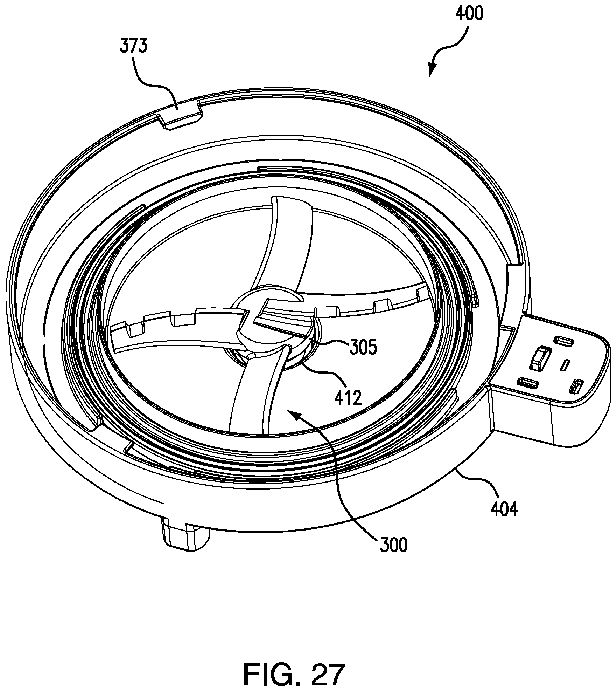

Referring to FIG. 27, a view of the underside of the lid assembly 400 with a blade assembly 300 releasably retained therein is shown. The lid assembly 400 includes a lid 404, a clip release lever 406, and a primary set of clips 408. The central support hub 305 of the blade assembly 300 is inserted into a central aperture 412 of the lid assembly 400.

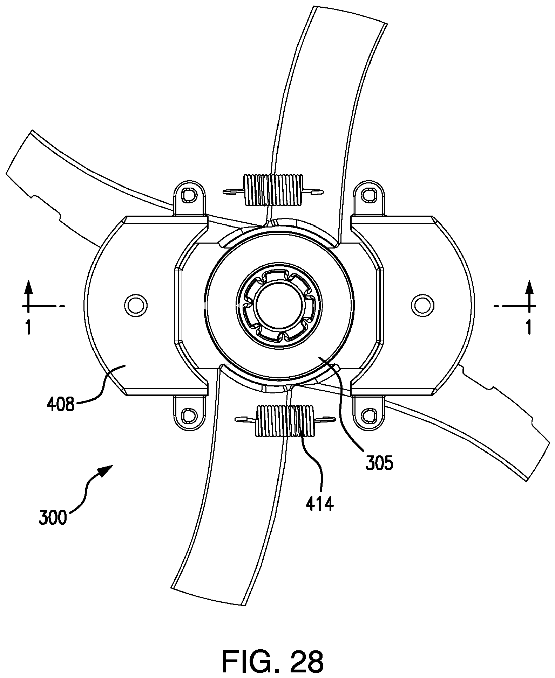

Referring now to FIG. 28, an isolated overhead view of the blade assembly 300 and the primary set of clips 408 is shown. The primary set of clips 408 are spring biased toward the central support hub 305 by at least one spring 414. The spring(s) 414 are shown unattached and in the compressed state in FIG. 28. In normal use, however, the spring(s) 414 are extended and attached to opposing primary clips 408 such that the spring(s) 414 tend to pull the opposing primary clips 408 toward each other.

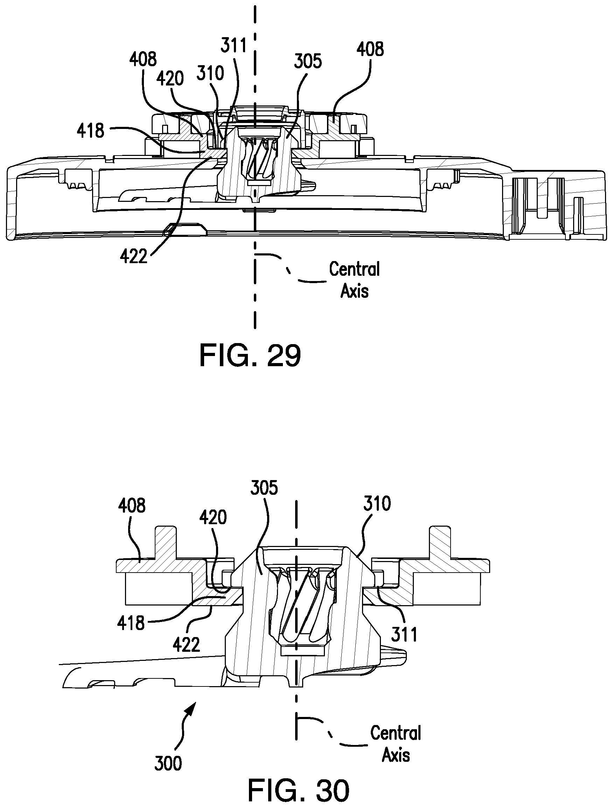

Referring now to FIGS. 29 and 30, the primary set of clips 408 are shown engaged with the central support hub 305. The central support hub 305 includes an external angled ledge 310 and an external undercut 311. Each primary clip in the set 408 includes a primary engagement structure 418 that includes a primary upper retention surface 420 and a primary lower surface 422. Although two primary clips 408 are shown in the embodiment, more or fewer than two clips can be utilized.

During the connection process, when the central support hub 305 of the blade assembly 300 is positioned in lid assembly 400, the primary lower surfaces 422 engage with the external angled ledge 310 of the central support hub 305. The primary lower surfaces 422 contact the external angled ledge 310 of the central support hub 305 and, when the blade assembly is pressed into the lid assembly 400, the primary lower surfaces 422 engage the external angled ledge 310 and tend to urge the primary set of clips 408 to move outwards against the force of the spring(s) 414. The outward movement of the primary set of clips 408 allows the primary engagement structures 418 to pass by the outside of the central support hub 305. When a blade assembly 300 is not located in the lid assembly 400, the primary set of clips 408 are urged by the spring(s) 414 to a rest position that is further inward than shown in, e.g., FIG. 30.

As shown in FIGS. 29 and 30, after the primary engagement structures 418 travel past the outside of the central support hub 305, the primary engagement structures 418 then enter the external central support hub undercut 311. The spring(s) 414 urge the primary set of clips 408 toward, and remain in, an engaged position. The external central support hub undercut 311 has a generally flat surface that extends radially outward at an approximately 90-degree angle relative to the central axis of the blade assembly 300. Similarly, the primary upper retention surface 420 is preferably angled such that it engages with the external central support hub undercut 311 in a manner that retains the blade assembly 300 in the lid assembly 400 even in the event that significant disengagement forces are applied to the blade assembly 300.

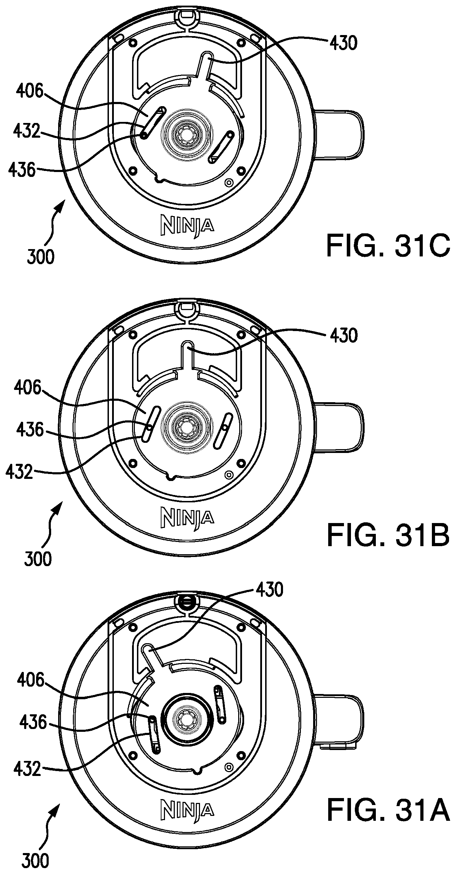

Referring now to FIGS. 31A-C, the lid assembly 400 also includes a clip release lever 406. The clip release lever 406 is retained on the remainder of the lid assembly 400 in a manner such that it can move rotationally relative to the remainder of the lid assembly 404 within a pre-determined range of motion. The embodiment shown permits rotation from a home position (0-degrees of rotation) to a fully-rotated position. In the embodiment shown, the clip release lever 406 includes a lever arm 430 and primary lever engagement surfaces 432. Therefore, motion of the clip release lever 406 directly imparts motion on the primary set of the clips 408, and vice versa, as shown sequentially in FIGS 31A, 31B and 31C.

The primary lever engagement surfaces 432 engage with the pins 436 of the primary set of clips 408 during at least some portion of the rotation of the clip release lever 406. The primary lever engagement surface 432 acts to move the primary set of clips 408 from the home position where the primary set of clips 408 are fully spring biased toward each other and are in the rest position (FIG. 31A) to a fully-rotated position where the primary set of clips 408 are retracted away from each other (FIG. 31C). As shown, the primary lever engagement surfaces 432 are located on an inner surface of opposing angled slots on the clip release lever 406 and engage with pins 436 on each of the primary clips 408 during at least a portion of the rotational travel of the clip release lever 406. In the present embodiment, the primary set of clips 408 are spring biased toward the central hub support 305 when a blade assembly 300 is positioned in lid assembly 400. In the present embodiment, the clip release lever 406 is in the mid-way position (see FIG. 31B), which is approximately half-way between the home position (FIG. 31A) and the fully-rotated position (FIG. 31C), when a blade assembly 300 is positioned in the lid assembly 400. Once the clip release lever 406 has been rotated past the position shown in FIG. 31B, the primary set of clips 408 begin to retract from the central support hub 305 until the primary set of clips 408 are fully retracted and cease retaining the blade assembly 300 in the lid assembly 400. When the clip release lever 406 is in the fully-rotated position (FIG. 31C), the primary set of clips 408 are retracted outward to a position outside of the central support hub 305, allowing the blade assembly 300 to be disengaged from the lid assembly 400, if desired. Likewise, in the position shown in FIG. 31C, the blade assembly 300 can also be installed into the lid assembly 400.

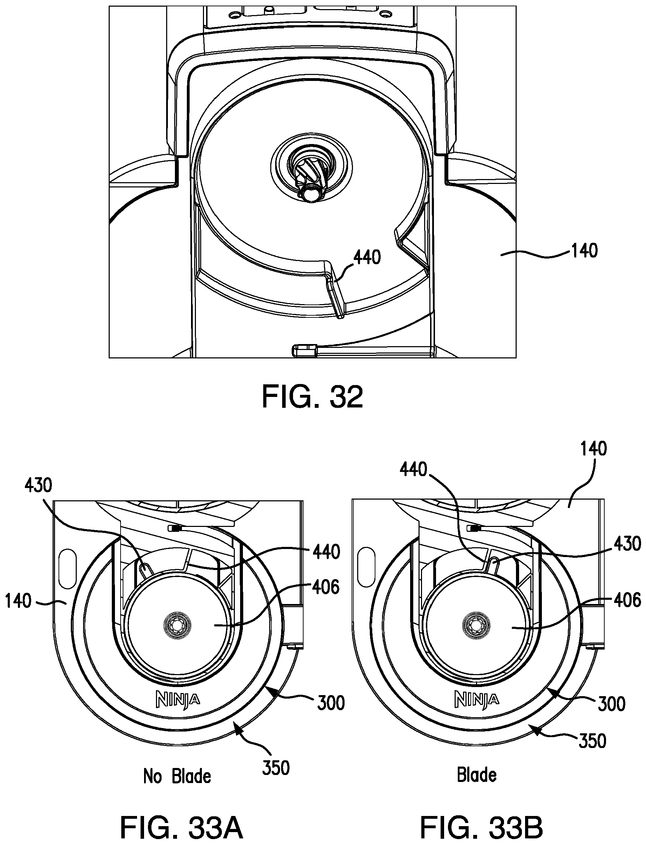

Referring now to FIG. 32, 33A, and 33B, the upper housing 140 includes a clip lever contact ledge 440. During the installation of the bowl assembly 350 and the lid assembly 400 onto the lower housing 100, the bowl and lid assemblies 350, 400 are placed on the lifting platform 360 and rotated relative to the lower base 100. As the installation of the bowl assembly 350 and the lid assembly 400 takes place, the lid assembly 400 rises upwards as it rotates relative to the lower base 100. In the event that the blade assembly 300 is properly installed in the lid assembly 400, the clip release lever 406 will rise to a height necessary to contact the clip lever contact ledge 440 during its rotation (see FIG. 33B). Conversely, in the event the blade assembly 300 is not installed in the lid assembly 400, the clip release lever 406 will not rise to the height necessary to contact the clip lever contact ledge 440 (FIG. 33A) and the clip release lever will rotate past the ledge 440. In instances where the clip release lever 406 contacts the clip lever contact ledge 440, the rotation of the clip release lever 406 relative to the lower base 100 will halt, and the clip release lever 406 will commence rotation relative to the remainder of the lid assembly 400. In instances where the clip release lever 406 does not contact the clip lever contact ledge 440, the rotation of the clip release lever 406 relative to the lower base 100 will continue, and the clip release lever 406 will continue to rotate with the remainder of the lid assembly 400 relative to the lower base 100. Therefore, the clip release lever 406 will be in a different position when the bowl assembly 650 and lid assembly 400 are fully installed depending on whether a blade assembly 300 is installed or not. In some embodiments, the final position of the clip release lever 406 when the bowl assembly 350 and lid assembly 400 are installed can be detected by the device to determine whether to operate as intended, or to indicate to the user that the blade assembly 300 is not properly installed.

In order for the power shaft 250 to properly connect to the blade assembly 300 during installation, the blade assembly 300 must be seated properly in the lid assembly 400 both prior to and immediately after completion of the connection to the power shaft 250. In order to detect proper location of the blade assembly 300, the device 10 can further include a blade assembly detection mechanism 450 that detects the positioning of the blade assembly 300. For example, the system can utilize optical, mechanical and/or electrical means.

In operation, a user places ingredient(s) inside the beaker 351 and then into a freezer until the ingredients are brought to the appropriate temperature; typically, the temperature is sub-freezing. The beaker 351 holding the frozen ingredients is then placed into the outer bowl 352. The blade assembly 300 is inserted into the lid assembly 400 such that the external central hub undercut engages the spring-biased primary sets of clips 408. The installation of the blade assembly 300 into the lid assembly 400 causes the clip release lever to rotate from the home position (FIG. 31A) to the mid-way rotated position (FIG. 32B). The lid assembly 400 (with installed blade assembly 300) is then placed onto the beaker 351 and outer bowl 352 and, together, placed onto the lifting platform 360.

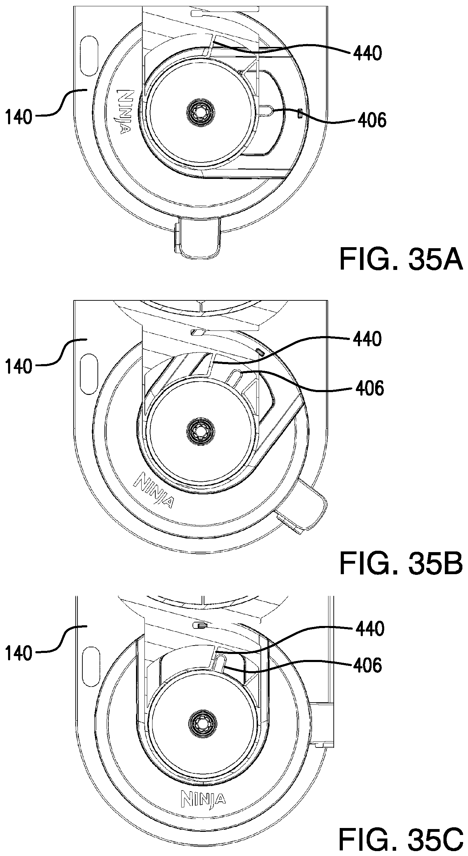

The user then rotates the bowl and the lid assemblies 350, 400 relative to the lower base 100 such that the lifting platform 362 rises upwards, moving the blade and lid assemblies 350, 400 toward the power shaft 250 and power shaft coupling 254 until the connection is completed. During the rotation, the clip release lever 406 rises to a height necessary to contact the clip lever contact ledge 440 (FIG. 35B) which halts the rotation of the clip release lever 406 relative to the lower base 100 and causes rotation of the clip release lever 406 relative to the remainder of the lid assembly 400. Preferably, the lid assembly 400 and blade assembly 300 are raised to a height necessary for the power shaft 250 / power shaft coupling 254 connection to be at least partially complete prior to the clip release lever contacting the ledge. More preferably, the power shaft 250 / power shaft coupling 254 connection is fully complete prior to the clip release lever contacting the ledge. Once the power shaft 250 / power shaft coupling 254 connection is complete, the magnet 258 on the power shaft 250 attaches to the blade assembly 300, retaining the blade assembly 300 in place. As the installation continues, the rotation of the clip release lever 406 relative to the remainder of the lid assembly 400 causes the primary set of clips 408 to disengage from the central support hub 305 of the blade assembly 300 while the bowl assembly 350 and remainder of the lid assembly 400 continue rotating until the installation is completed.

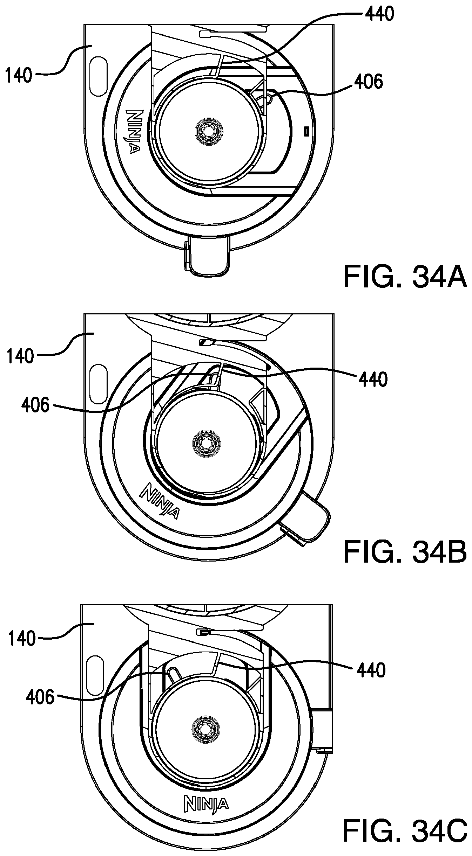

In instances where the blade assembly 300 is not installed in the lid assembly 400 prior to installation of the bowl assembly 350 and lid assembly 400 into the device, the clip release lever 406 will be located in the home position at the commencement of the installation process. As the bowl assembly 350 and lid assembly 400 rotate on the lifting platform 360, the clip release arm 430 will, as shown in FIGS. 34A-C, pass under the ledge 440 prior to rising to the height necessary to contact the ledge 440. The clip release lever 406 will continue to rotate with the lid assembly 400 throughout installation, indicating to the device 10 and/or user that the blade assembly 300 is not installed, and the device 10 will not operate as expected.

In instances where the blade assembly 300 is properly installed in the bowl assembly 350 and lid assembly 400, the user may optionally select to operate the device 10 using a pre-determined program to produce a desired product using the user interface. Alternatively, a manual operation, where the user dictates the speed of the rotation of the blade, the rate of descent of the blade, and/or the depth the blade enters into the ingredient(s) (among other controllable parameters), can be carried out. The drive motor operates to turn the power shaft 250 and, accordingly, the blade assembly 300. As the blade assembly 300 turns, the cutting blades 301, 302 and mixing blades 303, 304 also begin to spin.

The position motor 260 operates to move drive motor assembly 240 and the blade assembly 300 upward and downward, based on the direction of operation. The now-spinning blade assembly 300 can then be plunged to a desired depth into the frozen ingredients at a desired spin rate and descent rate. As the blade assembly 300 spins in the frozen ingredients, the cutting blades 301, 302 operate to repeatedly cut through a thin layer of the frozen ingredients and the mixing blades 303, 304 operate to mix and smooth the loosened frozen ingredients.

After the blade assembly 300 has reached the desired lowest position in the frozen ingredients, the blade assembly 300 is then moved back upwards toward the lid assembly 400 by reversing the direction of the position motor 260. The blade assembly 300 can, optionally, be repeatedly plunged into the frozen ingredient(s) additional times. After the final plunge into the frozen ingredients, the position motor 260 is operated until the blade assembly 300 is returned to the lid assembly 400.

The user then rotates the bowl and lid assemblies 350, 400 relative to the lower base 100 in the opposite direction that was utilized during installation. The rotation of the bowl and lid assemblies 350, 400 permits rotation of the clip release lever 406 from the fully-rotated position to the midway rotated position and the primary set of clips 408 re-engage with the central support hub 305 of the blade assembly 300. The rotation of the bowl assembly and lid assemblies 350, 400 also causes the lifting platform 360 to move downwards toward the lower base 100. As the bowl and lid assemblies 350, 400 move downwards, the blade assembly 300 separates from the power coupling 252. The bowl and lid assemblies 350, 400 are then removed from the remainder of the device 10, and the lid assembly 400 (with the blade assembly 300 still installed therein) is removed from the bowl assembly 350. The now-processed ingredients can now be enjoyed.

The user can optionally rotate the clip release lever 406 to the fully rotated position, releasing the primary set of clips 408 from engagement with the central support hub 305. With both the primary sets of clips 408 released, the user can easily remove the blade assembly 300 from the lid assembly 400 for cleaning and/or storage.

As shown throughout the drawings, like reference numerals designate like or corresponding parts. While illustrative embodiments of the present disclosure have been described and illustrated above, it should be understood that these are exemplary of the disclosure and are not to be considered as limiting.

## Claims

1. A micro puree machine, comprising:
a blade assembly (300) having a central support hub (305), a blade, and an undercut (311) extending at least partially around a circumference of the central support hub (305); and
a lid assembly (400) configured to cooperate with a bowl assembly (350), the lid assembly (400) including a lid (404) and a clip mechanism, the lid (404) having an aperture (412) that defines an axis;
wherein the clip mechanism is movable between a first position and a second position, at least a portion of the clip mechanism cooperating with the undercut (311) at times the clip mechanism is the in the first position and at least a portion of the central support hub (305) is positioned in the aperture (412);
wherein the blade assembly (300) is retained in the lid assembly (400) at times the clip mechanism is in or near the first position, and the blade assembly (300) is disengaged from the undercut (311) and removable from the lid assembly (400) at times the clip mechanism is in or near the second position;
**characterised in that** the clip mechanism is spring biased toward the axis.

2. The micro puree machine of claim 1, wherein the undercut (311) has a surface that extends radially outward at an approximately 90-degree angle relative to the axis of the blade assembly (300).

3. The micro puree machine of claim 1, wherein the clip mechanism includes an upper retention surface that is angled such that it engages with the external central support hub undercut (311).

4. The micro puree machine of claim 1, wherein at least a portion of the clip mechanism cooperates with the undercut (311) at times the mechanism is between the first and second positions.

5. A blade assembly (300), comprising:
a central support hub (305) having an upper end and a lower end, the central support hub (305) defining a central axis;
a cutting blade extending outward from a circumferential surface of the central support hub (305) and defining a curved leading edge;
a mixing blade;
a central opening located at the upper end of the central support hub (305) and coaxial with the central axis, the central opening being configured to receive a power shaft therein an angled ledge located at the upper end of the central support hub (305), the angled ledge extending about at least a portion of an outer perimeter of the central support hub (305); and
an undercut (311) located on the outer perimeter of the central support hub (305), the undercut (311) being positioned closer to the lower end of the central support hub (305) than the angled ledge;
wherein the undercut (311) includes an engagement surface that extends outwards from the central axis of the central support hub (305); and
wherein the undercut (311) is configured to receive and retain a clip mechanism; and
wherein the lower end of the central support hub (305) includes an underside surface, the underside surface including a V-shaped groove (325) that extends across a portion of a side of a cutting blade.

6. The blade assembly of claim 5, wherein the central support hub (305) is generally cylindrical.

7. The blade assembly of claim 5, wherein the blade assembly (300) includes a first cutting blade and a second cutting blade, the first cutting blade includes a first groove located at a first distance from the central axis, the first groove defining a first length.

8. The blade assembly of claim 7, further comprising a second cutting blade including a second groove located at a second distance from the central axis, the second groove defining a second length.

9. The blade assembly of claim 8, wherein the first length of the first groove is greater than the second length of the second groove.

10. A lid assembly (400) for use with a micro puree machine, comprising:
a lid (404) defining an axis;
a clip mechanism being movable between an inward position and an outward position relative to the axis;
a release mechanism positionable relative to the clip mechanism between a home position and a release position, the release mechanism being operable to move the clip mechanism between the inward position and the outward position;
wherein at times the release mechanism is positioned toward the home position, the clip mechanism is moved toward the inward position; and
wherein at times the release mechanism is positioned toward the release position, the clip mechanism is moved toward the outward position.

11. The lid assembly of claim 10, wherein the release mechanism includes an outer side contact surface configured to contact a feature on the micro puree machine during installation.

12. The lid assembly of claim 10, wherein the clip mechanism includes a clip engagement feature that is configured to engage a clip engagement surface on the release mechanism.

13. The lid assembly of claim 12, wherein the clip engagement surface is an internal hole on the clip release lever.

## Patentansprüche

1. Mikro-Püree-Maschine, umfassend:
eine Klingenbaugruppe (300), die eine mittige Stütznabe (305), eine Klinge und eine Hinterschneidung (311) aufweist, die sich mindestens teilweise um einen Umfang der mittigen Stütznabe (305) erstreckt; und
eine Deckelbaugruppe (400), die zum Zusammenwirken mit einer Schüsselbaugruppe (350) konfiguriert ist, wobei die Deckelbaugruppe (400) einen Deckel (404) und einen Klemmmechanismus beinhaltet, wobei der Deckel (404) eine Öffnung (412) aufweist, die eine Achse definiert;
wobei der Klemmmechanismus zwischen einer ersten Position und einer zweiten Position beweglich ist und mindestens ein Abschnitt des Klemmmechanismus mit der Hinterschneidung (311) zusammenwirkt, wenn sich der Klemmmechanismus in der ersten Position befindet und mindestens ein Abschnitt der mittigen Stütznabe (305) in der Öffnung (412) positioniert ist;
wobei die Klingenbaugruppe (300) in der Deckelbaugruppe (400) gehalten wird, wenn sich der Klemmmechanismus in oder nahe der ersten Position befindet, und die Klingenbaugruppe (300) von der Hinterschneidung (311) gelöst und von der Deckelbaugruppe (400) abnehmbar ist, wenn sich der Klemmmechanismus in oder nahe der zweiten Position befindet;
**dadurch gekennzeichnet, dass** der Klemmmechanismus zu der Achse hin federvorgespannt ist.

2. Mikro-Püree-Maschine nach Anspruch 1, wobei die Hinterschneidung (311) eine Fläche aufweist, die sich radial nach außen in einem Winkel von ungefähr 90 Grad relativ zu der Achse der Klingenbaugruppe (300) erstreckt.

3. Mikro-Püree-Maschine nach Anspruch 1, wobei der Klemmmechanismus eine obere Haltefläche beinhaltet, die abgewinkelt ist, sodass sie in die äußere Hinterschneidung (311) der mittigen Stütznabe eingreift.

4. Mikro-Püree-Maschine nach Anspruch 1, wobei mindestens ein Abschnitt des Klemmmechanismus mit der Hinterschneidung (311) zusammenwirkt, wenn sich der Mechanismus zwischen der ersten und der zweiten Position befindet.

5. Klingenbaugruppe (300), umfassend:
eine mittigen Stütznabe (305), die ein oberes und ein unteres Ende aufweist, wobei die mittigen Stütznabe (305) eine Mittelachse definiert;
eine Schneidklinge, die sich von einer Umfangsfläche der mittigen Stütznabe (305) nach außen erstreckt und eine gekrümmte Vorderkante bildet;
ein Mischblatt;
eine mittige Öffnung, die sich an dem oberen Ende der mittigen Stütznabe (305) befindet und koaxial zu der Mittelachse ist, wobei die mittige Öffnung dazu konfiguriert ist, eine Antriebswelle darin aufzunehmen; eine abgewinkelte Leiste, die sich an dem oberen Ende der mittigen Stütznabe (305) befindet, wobei die abgewinkelte Leiste sich um mindestens einen Abschnitt eines Außenumfangs der mittigen Stütznabe (305) erstreckt; und
eine Hinterschneidung (311), die sich an dem äußeren Umfang der mittigen Stütznabe (305) befindet, wobei die Hinterschneidung (311) näher an dem unteren Ende der mittigen Stütznabe (305) positioniert ist als die abgewinkelte Leiste;
wobei die Hinterschneidung (311) eine Eingriffsfläche beinhaltet, die sich von der Mittelachse der mittigen Stütznabe (305) nach außen erstreckt; und
wobei die Hinterschneidung (311) dazu konfiguriert ist, einen Klemmmechanismus aufzunehmen und zu halten; und
wobei das untere Ende der mittigen Stütznabe (305) eine Unterseitenfläche beinhaltet, wobei die Unterseitenfläche eine V-förmige Nut (325) beinhaltet, die sich über einen Abschnitt einer Seite einer Schneidklinge erstreckt.

6. Klingenbaugruppe nach Anspruch 5, wobei die mittige Stütznabe (305) im Wesentlichen zylindrisch ist.

7. Klingenbaugruppe nach Anspruch 5, wobei die Klingenbaugruppe (300) eine erste Schneidklinge und eine zweite Schneidklinge beinhaltet, wobei die erste Schneidklinge eine erste Nut beinhaltet, die sich in einem ersten Abstand von der Mittelachse befindet, wobei die erste Nut eine erste Länge definiert.

8. Klingenbaugruppe nach Anspruch 7, ferner umfassend eine zweite Schneidklinge, die eine zweite Nut beinhaltet, die sich in einem zweiten Abstand von der Mittelachse befindet, wobei die zweite Nut eine zweite Länge definiert.

9. Klingenbaugruppe nach Anspruch 8, wobei die erste Länge der ersten Nut größer ist als die zweite Länge der zweiten Nut.

10. Deckelbaugruppe (400) zur Verwendung mit einer Mikro-Püree-Maschine, umfassend:
einen Deckel (404), der eine Achse definiert;
einen Klemmmechanismus, der zwischen einer inneren Position und einer äußeren Position relativ zu der Achse beweglich ist;
einen Freigabemechanismus, der relativ zu dem Klemmmechanismus zwischen einer Ausgangsposition und einer Freigabeposition positionierbar ist, wobei der Freigabemechanismus dazu dient,
den Klemmmechanismus zwischen der inneren Position und der äußeren Position zu bewegen;
wobei zu Zeiten, in denen der Freigabemechanismus zu der Ausgangsposition hin positioniert ist, der Klemmmechanismus zu der inneren Position hin bewegt wird; und
wobei zu Zeiten, in denen der Freigabemechanismus zu der Freigabeposition hin positioniert ist, der Klemmmechanismus zu der äußeren Position hin bewegt wird.

11. Deckelbaugruppe nach Anspruch 10, wobei der Freigabemechanismus eine äußere seitliche Kontaktfläche beinhaltet, die dazu konfiguriert ist, während der Installation mit einer Vorrichtung an der Mikro-Püree-Maschine in Kontakt zu treten.

12. Deckelbaugruppe nach Anspruch 10, wobei der Klemmmechanismus ein Klemmeingriffsmerkmal umfasst, das dazu konfiguriert ist, in eine Klemmeingriffsfläche am Freigabemechanismus einzugreifen.

13. Deckelbaugruppe nach Anspruch 12, wobei die Klemmeingriffsfläche ein inneres Loch an dem Klemmfreigabehebel ist.

## Revendications

1. Machine de micro-purée, comprenant :
un ensemble lame (300) présentant un moyeu de support central (305), une lame et une contre-dépouille (311) s'étendant au moins partiellement autour d'une circonférence du moyeu de support central (305) ; et
un ensemble couvercle (400) configuré pour coopérer avec un ensemble bol (350), l'ensemble couvercle (400) comportant un couvercle (404) et un mécanisme de pince, le couvercle (404) présentant une ouverture (412) qui définit un axe ;
dans laquelle le mécanisme de pince est amovible entre une première position et une seconde position, au moins une partie du mécanisme de pince coopérant avec la contre-dépouille (311) lorsque le mécanisme de pince est dans la première position et au moins une partie du moyeu de support central (305) est positionné dans l'ouverture (412) ;
dans laquelle l'ensemble lame (300) est retenu dans l'ensemble couvercle (400) lorsque le mécanisme de pince est dans ou à proximité de la première position, et l'ensemble lame (300) est dégagé de la contre-dépouille (311) et peut être retiré de l'ensemble couvercle (400) lorsque le mécanisme de pince se trouve dans ou à proximité de la seconde position ;
**caractérisée en ce que** le mécanisme de pince est sollicité par ressort vers l'axe.

2. Machine de micro-purée selon la revendication 1, dans laquelle la contre-dépouille (311) présente une surface qui s'étend radialement vers l'extérieur selon un angle d'environ 90 degrés par rapport à l'axe de l'ensemble lame (300).

3. Machine de micro-purée selon la revendication 1, dans laquelle le mécanisme de pince comporte une surface de rétention supérieure qui est inclinée de sorte qu'elle vienne en prise avec la contre-dépouille (311) du moyeu de support central externe.

4. Machine de micro-purée selon la revendication 1, dans laquelle au moins une partie du mécanisme de pince coopère avec la contre-dépouille (311) lorsque le mécanisme se trouve entre la première et la seconde position.

5. Ensemble lame (300), comprenant :
un moyeu de support central (305) présentant une extrémité supérieure et une extrémité inférieure, le moyeu de support central (305) définissant un axe central ;
une lame de coupe s'étendant vers l'extérieur à partir d'une surface circonférentielle du moyeu de support central (305) et définissant un bord d'attaque incurvé ;
une lame de mélange ;
une ouverture centrale située à l'extrémité supérieure du moyeu de support central (305) et coaxiale à l'axe central, l'ouverture centrale étant configurée pour recevoir un arbre de puissance à l'intérieur d'un rebord incliné situé à l'extrémité supérieure du moyeu de support central (305), le rebord incliné s'étendant autour d'au moins une partie d'un périmètre extérieur du moyeu de support central (305) ; et
une contre-dépouille (311) située sur le périmètre extérieur du moyeu de support central (305), la contre-dépouille (311) étant positionnée plus près de l'extrémité inférieure du moyeu de support central (305) que le rebord incliné ;
dans lequel la contre-dépouille (311) comporte une surface de mise en prise qui s'étend vers l'extérieur depuis l'axe central du moyeu de support central (305) ; et
dans lequel la contre-dépouille (311) est configurée pour recevoir et retenir un mécanisme de pince ; et
dans lequel l'extrémité inférieure du moyeu de support central (305) comporte une surface inférieure, la surface inférieure comportant une rainure en forme de V (325) qui s'étend sur une partie d'un côté d'une lame de coupe.

6. Ensemble lame selon la revendication 5, dans lequel le moyeu de support central (305) est généralement cylindrique.

7. Ensemble lame selon la revendication 5, dans lequel l'ensemble lame (300) comporte une première lame de coupe et une seconde lame de coupe, la première lame de coupe comporte une première rainure située à une première distance de l'axe central, la première rainure définissant une première longueur.

8. Ensemble lame selon la revendication 7, comprenant en outre une seconde lame de coupe comportant une seconde rainure située à une seconde distance de l'axe central, la seconde rainure définissant une seconde longueur.

9. Ensemble lame selon la revendication 8, dans lequel la première longueur de la première rainure est supérieure à la seconde longueur de la seconde rainure.

10. Ensemble couvercle (400) destiné à être utilisé avec une machine de micro-purée, comprenant :
un couvercle (404) définissant un axe ;
un mécanisme de pince amovible entre une position intérieure et une position extérieure par rapport à l'axe ;
un mécanisme de libération pouvant être positionné par rapport au mécanisme de pince entre une position de départ et une position de libération, le mécanisme de libération pouvant être actionné pour déplacer le mécanisme de pince entre la position intérieure et la position extérieure ;
dans lequel lorsque le mécanisme de libération est positionné vers la position de départ, le mécanisme de pince est déplacé vers la position intérieure ; et
dans lequel lorsque le mécanisme de libération est positionné vers la position de libération, le mécanisme de pince est déplacé vers la position extérieure.

11. Ensemble couvercle selon la revendication 10, dans lequel le mécanisme de libération comporte une surface de contact latérale externe configurée pour entrer en contact avec un élément sur la machine de micro-purée pendant l'installation.

12. Ensemble couvercle selon la revendication 10, dans lequel le mécanisme de pince comporte un élément de mise en prise de pince qui est configuré pour mettre en prise une surface de mise en prise de pince sur le mécanisme de libération.

13. Ensemble couvercle selon la revendication 12, dans lequel la surface de mise en prise de pince est un trou interne sur le levier de libération de pince.
